# EUROPÄISCHE PATENTANMELDUNG

(11) **EP 2 759 428 A2**
(43) Veröffentlichungstag der Anmeldung: **30.07.2014**
(21) Anmeldenummer: 13198312.4
(22) Anmeldetag: 19.12.2013
(51) Int. Cl.: B60J 5/06, E05D 15/00

(54) **Seitenrollenwagen und Führungsgurt mit Schiene für eine Schiebeverdeckstruktur eines Fahrzeugaufbaus oder eines Containers**

(30) Priorität: 23.01.2013 DE 102013201005
(71) Anmelder: ZF Friedrichshafen AG, 88038 Friedrichshafen (DE)
(72) Erfinder: Tiemann, Burkhard, 49152 Bad Essen (DE); Lagemann, Bernard, 49434 Neuenkirchen (DE)

(57) **Zusammenfassung**

Die Erfindung betrifft einen Seitenrollenwagen (35) zum Halten einer Plane einer Schiebeverdeckstruktur (1) eines Fahrzeugaufbaus oder eines Containers, wobei der Seitenrollenwagen (35) zumindest zwei Laufrollen (36) aufweist, die ausgestaltet sind zum Laufen auf einer ersten Lauffläche (28) einer längs des Fahrzeugaufbaus oder Containers orientierten Schiene (21), wobei zumindest eine Führungsrolle (37) vorgesehen ist, welche unterhalb der zumindest zwei Laufrollen (36) angeordnet ist, wobei die zumindest eine Führungsrolle (37) derart angeordnet ist, dass eine erste Drehachse der Führungsrolle nicht parallel zu einer zweiten Drehachse einer der zumindest zwei Laufrollen ist. Die Erfindung betrifft weiterhin einen Führungsgurt (3, 3') mit zumindest einer Schiene (21) für Seitenrollenwagen (35), wobei die Schiene (21) eine erste Lauffläche (28) aufweist, auf welcher Laufrollen (36) der Seitenrollenwagen (35) laufen können, wobei die Schiene (21) eine zweite Lauffläche (30) aufweist, auf welcher Führungsrollen (37) der Seitenrollenwagen (35) laufen können, wobei die erste Lauffläche (28) nicht parallel zu der zweiten Lauffläche (30) verläuft.

## Beschreibung

Die Erfindung betrifft einen Seitenrollenwagen für eine Schiebeverdeckstruktur gemäß dem Oberbegriff des Anspruchs 1 und einen Führungsgurt mit einer Schiene für einen Rollenwagen einer Schiebeverdeckstruktur gemäß dem Oberbegriff des Anspruchs 6.

Lastwagen, das heißt Lastkraftwagen und Anhänger (Fahrzeugaufbau) sowie Auflieger der Lastkraftwagen, sind im Stand der Technik in verschiedenen Ausgestaltungen bekannt. So sind beispielsweise die sogenannten Pritschenwagen bekannt, die eine ebene offene Ladefläche hinter der Fahrerkabine aufweisen. Um dennoch einen sicheren und trockenen Transport von Ladung zu gewährleisten, ist die Ladefläche derartiger Pritschenwagen üblicherweise mit einem Verdeck versehen. Im Stand der Technik sind hierzu feste Verdecke und Schiebeverdecke bekannt. Schiebeverdecke können geöffnet werden, weisen gegenüber festen Verdecken daher den Vorteil auf, dass der Ladevorgang des Lastwagens, beispielsweise bei Kranbeladung, durch den Schiebemechanismus erheblich erleichtert wird, da der Laderaum von oben oder seitlich zugänglich gemacht werden kann. Die Schiebeverdecke umfassen obere Planen und seitliche Planen. Die seitlichen Planen befinden sich an den Längsseiten der Ladefläche. Die seitlichen Planen sind an ihren Oberseiten jeweils an Rollenwagen aufgehängt, die mit ihren Laufrollen auf Längsschienen laufen und mittels Verschieben und/oder Zusammenschieben der Planen der Zugang zu der Ladefläche geöffnet bzw. geschlossen werden kann.

Ein grundsätzliches Problem besteht darin, dass die seitlichen Planen sehr fest verzurrt werden müssen, da ein Flattern dieser Planen zu einem erheblich höheren Kraftstoffverbrauch führt. Entsprechend sind die seitlichen Planen mit Gurten durchsetzt und können mit Spannvorrichtungen mit sehr hohen Zugkräften gespannt werden. Die Zugkräfte wirken auf die Laufrollen des Rollenwagens und werden derart übertragen, dass hier seitliche, also nicht in der Lauffläche wirkende Kräfte axial wirken. Diese axialen Kräfte können zu einem Zerbrechen der Laufrollen führen.

Ein Rollenwagen ist aus DE 20 2009 002 621 U1 bekannt.
Diese zeigt einen Rollenwagen für eine seitliche Faltplane, welcher einen Abstandhalter aufweist, um ein Verkippen des Rollenwagens zu verhindern.

Es ist eine Aufgabe der vorliegenden Erfindung, einen Rollenwagen und einen Führungsgurt mit einer Schiene der eingangs genannten Art bereitzustellen, bei dem ein Verkippen des Rollenwagens zuverlässig verhindert wird, wobei der Rollenwagen aber dennoch leicht entlang der Schiene beweglich ist.

Diese Aufgabe wird durch einen Seitenrollenwagen für eine Schiebeverdeckstruktur mit den Merkmalen gemäß Anspruch 1 und einen Führungsgurt mit einer Schiene für einen Seitenrollenwagen mit den Merkmalen gemäß Anspruch 6 gelöst. Bevorzugte Ausführungsformen der Erfindung sind in den abhängigen Ansprüchen definiert.

Es wird ein Seitenrollenwagen zum Halten einer Plane einer Schiebeverdeckstruktur eines Fahrzeugaufbaus oder eines Containers bereitgestellt, wobei der Seitenrollenwagen zumindest zwei Laufrollen aufweist, die ausgestaltet sind zum Laufen auf einer ersten Lauffläche einer Schiene, wobei zumindest eine Führungsrolle vorgesehen ist, welche unterhalb der zumindest zwei Laufrollen angeordnet ist und zum Laufen auf einer zweiten Lauffläche der Schiene ausgestaltet ist, wobei die zumindest eine Führungsrolle derart angeordnet ist, dass eine erste Drehachse der Führungsrolle nicht parallel zu einer zweiten Drehachse einer der zumindest zwei Laufrollen ist. Die erste und die zweite Drehachse weisen somit einen Schnittpunkt auf oder sind windschief.

Ein Aspekt ist somit, dass die zumindest eine Führungsrolle unterhalb der zumindest zwei Laufrollen angeordnet ist, das heißt in Richtung der Kraft, die durch das Festzurren und das Gewicht der durch den Seitenrollenwagen gehaltenen Plane auf den Seitenrollenwagen ausgeübt wird. Durch die Erfindung ergibt sich zum einen der Vorteil, dass der Seitenrollenwagen leicht auf der Schiene beweglich ist, denn die Teile, welche die Schiene berühren, sind Rollen. Zum anderen ist der Höhenunterschied des Punktes, an welchem die Laufrolle auf einer zugeordneten Lauffläche der Schiene aufliegt, und desjenigen Punktes, an welchem die Führungsrolle an der Schiene anliegt, geringer als bei den aus dem Stand der Technik bekannten Ausführungen. Hierdurch ist die Hebelwirkung, die zu einer axialen Belastung der Laufrolle führt, geringer als beim Stand der Technik.

Gemäß einer vorteilhaften Ausführungsform ist vorgesehen, dass die zumindest zwei Laufrollen parallele Drehachsen aufweisen. Daraus ergibt sich, dass die zumindest eine Führungsrolle derart angeordnet ist, dass die erste Drehachse der Führungsrolle nicht parallel zu beiden Drehachsen der zumindest zwei Laufrollen ist. Vorteilhaft ist hier, dass die axiale Belastung auf die Laufrollen weiter verringert wird.

Gemäß einer vorteilhaften Ausführungsform ist vorgesehen, dass die erste Drehachse der Führungsrolle und die zweite Drehachse einer der zumindest zwei Laufrollen einen Winkel im Bereich zwischen 5° bis 175°, vorzugsweise 45° bis 135°, besonders bevorzugt 80°bis 100°, insbesondere etwa 90°einschließen.

Dass die Drehachse der zumindest einen Führungsrolle im Betriebszustand vorteilhafterweise senkrecht zu den Drehachsen der zumindest zwei Laufrollen angeordnet ist, ist gleichbedeutend damit, dass die zumindest eine Führungsrolle senkrecht zu zumindest zwei Laufrollen steht; die Laufrollen sind vertikal angeordnet und haben horizontale Drehachsen, die Führungsrollen sind horizontal angeordnet und haben vertikale Drehachsen.

Gemäß einer vorteilhaften Ausführungsform ist vorgesehen, dass die zumindest eine Führungsrolle im Betriebszustand des Seitenrollenwagens zur Fahrzeuginnenseite oder Containerinnenseite orientiert ist. Somit kann sich die Führungsrolle gegen die Fahrzeuginnenseite oder Containerinnenseite abstützen.

Gemäß einer weiteren vorteilhaften Ausführungsform ist vorgesehen, dass der Seitenrollenwagen eine Halteplatte umfasst, an welcher zumindest ein Schenkel angeordnet ist, an dem die zumindest eine Führungsrolle angeordnet ist, wobei der Schenkel aus der Halteplatte herausgeformt ist. Der so ausgeführte Rollenwagen kann besonders einfach und somit kostengünstig gefertigt werden. Vorzugsweise ist die genannte Halteplatte als Metallplatte ausgebildet.

Gemäß noch einer weiteren bevorzugten Ausführungsform ist die zumindest eine Führungsrolle aus Kunststoff gefertigt. Aus Kunststoff gefertigte Laufrollen weisen den Vorteil auf, dass sie besonders geräuscharm laufen.

Gemäß noch einer weiteren vorteilhaften Ausführungsform ist die zumindest eine Führungsrolle derart angeordnet, dass ein erster Abstand von der Führungsrolle zu einer der zumindest zwei Laufrollen gleich einem zweiten Abstand von der Führungsrolle zu der anderen der zumindest zwei Laufrollen ist. Bei einer derartigen Anordnung wird verhindert, dass sich der Laufwagen beim Bewegen verkantet.

Die Erfindung umfasst auch einen Führungsgurt mit einer Schiene für Seitenrollenwagen, insbesondere für solche wie zuvor beschrieben wurden, wobei die Schiene eine erste Lauffläche aufweist, auf welcher Laufrollen der Seitenrollenwagen laufen können, und wobei die Schiene eine zweite Lauffläche aufweist, auf welcher Führungsrollen der Seitenrollenwagen laufen können, wobei die erste Lauffläche nicht parallel zu der zweiten Lauffläche verläuft.

Die Schiene bzw. der Führungsgurt verläuft vorzugsweise in Längsrichtung oder in Querrichtung des Fahrzeugaufbaus oder Containers. Die erste Lauffläche sowie die zweite Lauffläche verlaufen somit vorzugsweise ebenfalls in Längsrichtung oder in Querrichtung des Lastwagens. Die erste Lauffläche kann im Querschnitt betrachtet U- oder V-förmig gestaltet sein. Dass die Laufflächen nicht parallel zueinander angeordnet sind, ist gleichbedeutend mit der Formulierung, dass Laufrollen, die auf diesen Laufflächen laufen, nicht parallel zueinander angeordnet sind. Die Schiene weist den Vorteil auf, dass sie einem Rollenwagen seitlichen Halt bietet, so dass Kräfte, die seitlich, also axial auf die Laufrollen in Richtung der Fahrzeuginnenseite oder Containerinnenseite wirken könnten, minimiert werden.

Gemäß einer vorteilhaften Ausführungsform ist vorgesehen, dass die zweite Lauffläche im Betriebszustand der Schiene weiter zur Fahrzeuginnenseite oder Containerinnenseite angeordnet ist als die erste Lauffläche. Dadurch lässt sich die innere Wandung der Schiene als Lauffläche ausbilden, was zu einer schmalen und somit platzsparenden Gestaltung der Schiene beiträgt.

Gemäß einer weiteren bevorzugten Ausführungsform ist an der Schiene parallel zu der zweiten Lauffläche an der der zweiten Lauffläche abgewandten Seite der Führungsrolle eine Anschlagfläche in Richtung für die zumindest eine Führungsrolle ausgebildet. Hierdurch ergibt sich der Vorteil, dass auch bei einem nach außen Ziehen der am Seitenrollenwagen befestigten Plane die Führungsrollen an dem Anschlag zum Anliegen kommen, ohne dass die Laufrollen an die Schiene anschlagen.

Gemäß einer weiteren bevorzugten Ausführungsform ist unterhalb der ersten und der zweiten Lauffläche ein Laufbereich mit unteren Laufflächen für Rungenwagen ausgebildet, wobei die unteren Laufflächen im Wesentlichen lotrecht unterhalb der ersten Lauffläche angeordnet sind. Vorteilhafterweise ist der Laufbereich für Rungenwagen in einer Ebene angeordnet ist, welche lotrecht unter der ersten Lauffläche angeordnet ist.

Somit ist die Außenkante der Führungsschiene in diesem Bereich nicht oder nur geringfügig gegenüber der ersten Lauffläche nach außen versetzt. Hierdurch ist die Hebelwirkung bei Zug an dem Seitenrollenwagen für die Plane verringert, da die Hebelwirkung nur über einen im Vergleich mit dem Stand der Technik kleineren Hebelarm wirkt.

Vorzugsweise beträgt der horizontale Versatz zwischen der ersten Lauffläche und der Außenkante der Führungsschiene weniger als 10 mm, bevorzugt kleiner gleich 7 mm.

Vorzugsweise ist die Schiene eine Profilschiene und die erste Lauffläche und die zweite Lauffläche sind in teilweise offenen Kammern angeordnet. Durch diese Konfiguration sind die Laufrollen und die Laufflächen besonders gut vor Verschmutzung geschützt.

Im Nachfolgenden werden Ausführungsformen der Erfindung unter Bezugnahme auf die beigefügte Zeichnung näher beschrieben. Es zeigen:
Fig. 1 eine Schiebeverdeckstruktur, bei welcher die Rollenwagen und Führungsgurte zum Einsatz kommen können;
Fig. 2 eine Schnittansicht eines Führungsgurts gemäß einer Ausführungsform;
Fig. 3 eine Schnittansicht eines Führungsgurts gemäß einer Ausführungsform, an welchem ein Seitenrollenwagen angeordnet ist;
Fig. 4 eine Schnittansicht des in Fig. 2 dargestellten Führungsgurts mit verschiedenen Rollenwagen;
Fig. 5 eine perspektivische Ansicht des in Fig. 4 dargestellten Führungsgurts; und
Fig. 6A-6F zeigen verschiedene Ansichten eines Seitenrollenwagens gemäß einer Ausführungsform.

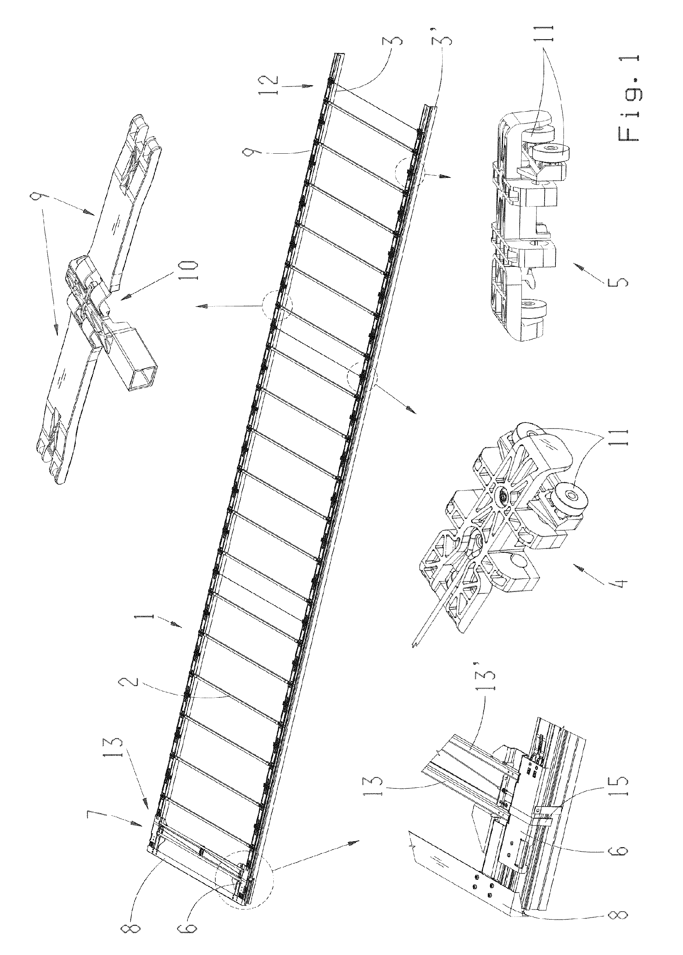

Figur 1 zeigt allgemein eine Schiebeverdeckstruktur 1 für einen Fahrzeugaufbau oder einen Container, welche hier in ausgefahrenem bzw. geschlossenem Zustand dargestellt ist. Die Schiebeverdeckstruktur 1 umfasst eine Vielzahl von Spriegeln 2, welche quer zwischen zwei parallel zueinander verlaufenden Führungsgurten 3, 3' angeordnet sind. Auf den Spriegeln 2 liegt eine Folie bzw. Plane auf. Die als Schienen ausgebildeten Führungsgurte 3, 3' sind einstückig aus Aluminium hergestellt und sind jeweilig mit Laufflächen versehen, an welchen eine Vielzahl von Rollenwagen mit jeweiligen Rollen 11 verschiebbar angeordnet sind, von denen hier lediglich ein mehrteilig ausgebildeter Rollenwagen 4 mit Seilanbindung, ein mehrteilig ausgebildeter Standard-Rollenwagen 5 und ein Endrollenwagen 6 exemplarisch dargestellt sind. Der Endrollenwagen 6 befindet sich an dem ersten Ende 7 der Schiebeverdeckstruktur 1, was beispielsweise dem hinteren Ende eines Lastwagens entspricht, an welchem eine Hebebühne angeordnet ist. An dem gegenüberliegenden vorderen zweiten Ende 12 der Schiebeverdeckstruktur 1 befindet sich das geschlossene Ende, an welchem beispielsweise die Führerkabine des Lastkraftwagens angeordnet ist. Zwischen den jeweils in den Führungsgurten 3 und 3' angeordneten Endrollenwagen 6 verläuft quer zu den Führungsgurten 3, 3' ein Portalbalken 8, welcher den Abschluss der Schiebeverdeckstruktur 1 bildet. Der Portalbalken 8 dient dazu, einerseits die Plane als in Querrichtung versteifendes Element an dem Fahrzeugaufbau zu befestigen. Weiterhin greifen typischerweise die Verschlüsse der Türen in den Portalbalken 8 ein, so dass bei verschlossenen Türen diese über die Türverschlüsse des Portalbalkens 8 ebenfalls befestigt und gesichert sind. Der Portalbalken 8 ist über eine hier nicht dargestellte Verbindungsstruktur, welche Hebelarme umfasst, mit den beidseitig angeordneten Endrollenwagen 6 verbunden, so dass durch Verschwenken der Hebelarme der Portalbalken 8 nach oben geklappt werden kann, um die Schiebeverdeckstruktur 1 zurückzuschieben. Weiterhin ist der Portalbalken 8 mit einer Winkelform ausgeführt, so dass er im heruntergeklappten Zustand auch die endseitigen Stirnseiten der Führungsgurte 3, 3' zumindest teilweise übergreift. Um ein Verschieben des Endrollenwagens 6 in der Endposition bei geschlossener Plane zu verhindern, ist ein Verriegelungsmechanismus 13, 13' vorgesehen. Durch Zug an einem Entriegelungsseil kann der Verriegelungsmechanismus 13, 13' freigegeben werden, so dass dann der Endrollenwagen 6 entlang der Führungsgurte 3, 3' verschiebbar ist. Eine Schlaufe 15 ist für die seitliche Betätigung des Verriegelungsmechanismus 13 dargestellt. Nach dem Entriegeln der Endrollenwagen 6 wird mit einer hier nicht dargestellten Stange, welche einen endseitigen Haken aufweist, an der Schlaufe 15 in Längsrichtung der Führungsgurte 3, 3' gezogen und die Schiebeverdeckstruktur 1 hierdurch geöffnet. Damit bei diesem Öffnungsvorgang, bei welchem lediglich an einer Seite des Fahrzeugaufbaus an solch einer Schlaufe 15 gezogen wird, keine Verkantung, d. h. kein Verkippen oder Verdrehen in einer waagerecht stehenden Ebene, der Endrollenwagen 6 auftritt, weisen diese mehrere hier nicht sichtbare Rollen auf. Rechts neben der Schlaufe 15 ist eine weitere Schlaufe dargestellt über die nach dem Entriegeln der Endrollenwagen 6 ebenfalls ein Öffnen oder Schließen der Schiebeverdeckstruktur 1 möglich ist. Die Endrollenwagen 6 sind mit den Standard-Rollenwagen 5 über zwischen den jeweiligen Rollenwagen angeordnete Faltplatten 9 verbunden. In der hier dargestellten Ausführungsform sind jeweils 18 Faltplatten 9 pro Führungsgurt 3 bzw. 3' vorgesehen. Mittig an den Faltplatten 9 ist eine Spriegelaufnahme 10 vorgesehen, an denen die Spriegel 2 befestigt sind, so dass die Spriegel 2 beim Öffnen der Schiebeverdeckstruktur 1 nach oben geschoben werden. Zwischen den Standard-Rollenwagen 5 sind jeweils zwei Rollenwagen 4 mit Seilanbindung zum gegenüberliegenden Rollenwagen 4 vorgesehen, was der Stabilisierung dient. Insbesondere wird hierdurch eine zusätzliche Querversteifung erzielt, da durch das Seil, mit welchem die zwei gegenüberliegenden Rollenwagen 4 verbunden sind, Zugkräfte nach außen abgefangen werden. Wie in Figur 1 ersichtlich ist, sind hier zwei solcher quer zu den Führungsgurten 3, 3' verlaufenden Seilanbindungen vorgesehen, welche die Führungsgurte 3, 3' in Längsrichtung in etwa Dritteln. Die Führungsgurte 3, 3' sind aus Metall, wie beispielsweise Aluminium, ausgebildet, wohingegen die Rollenwagen 4, 5, 6 und Faltplatten 9 zumindest überwiegend aus Kunststoff hergestellt sind.

Damit die hier nicht dargestellte Faltplane in geschlossenem Zustand nicht durch den Fahrtwind ins Flattern kommt, was zu einem erheblich höheren Spritverbrauch führen würde, weist sie mehrere hier nicht dargestellte Rungen auf, welche lösbar mit der Ladefläche verbunden werden können, beispielsweise indem sie in entsprechende Ausnehmungen eingesteckt werden. An der Oberseite sind die Rungen mit den Rollenwagen 4, 5 verbunden.

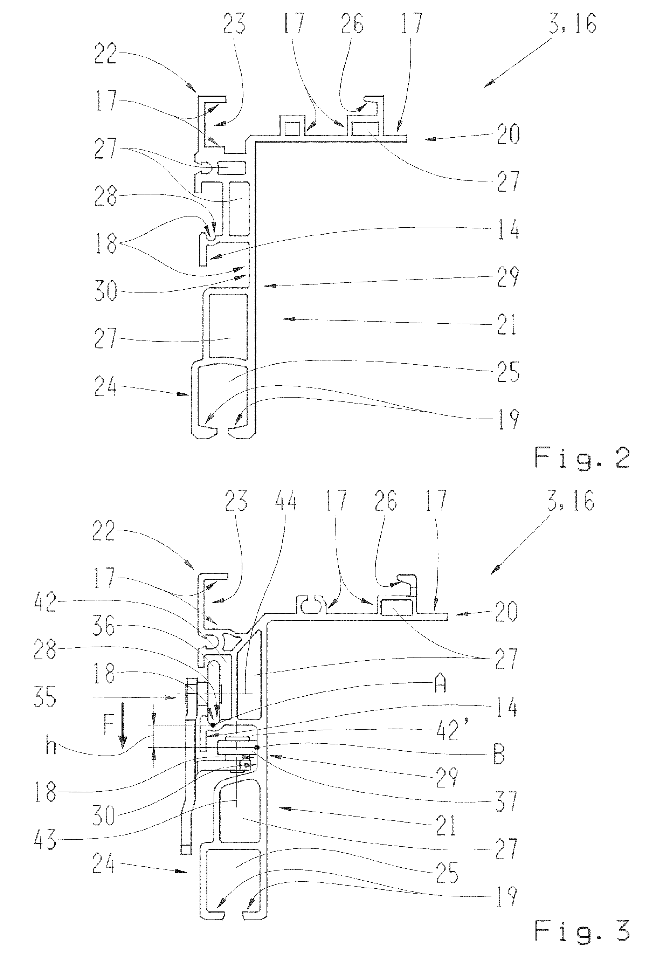

Figur 2 zeigt eine Schnittansicht eines Führungsgurts 3 für eine Schiebeverdeckstruktur 1 (siehe Figur 1) eines Fahrzeugaufbaus, welcher einen einstückigen Profilkörper 16 mit einer Vielzahl von Laufflächen umfasst. Hier sind obere Laufflächen 17 für Rollen einer Vielzahl von Rollenwagen zum Bewegen einer oberen Dachstruktur, welches die in Figur 1 beschriebenen Rollenwagen mit Seilanbindung 4, die Standard-Rollenwagen 5 und die Endrollenwagen 6 sind, seitliche Laufflächen 18 für Rollen einer Vielzahl von Rollenwagen zum Bewegen einer seitlichen Wandstruktur und untere Laufflächen 19 zur Aufnahme von Rollen mit daran angeordneten Rungen vorgesehen. Der Profilkörper 16 aus einem Winkelprofil mit einem horizontalen ersten Schenkel bzw. einer ersten Schiene 20, welcher die oberen Laufflächen 17 aufweist, und einem vertikalen zweiten Schenkel bzw. einer zweiten Schiene 21, welcher die seitlichen und unteren Laufflächen 18, 19 aufweist, ausgebildet. Wie hier erkennbar ist, liegen die in der Figur linken oberen Laufflächen 17 vertikal fluchtend über einer der seitlichen Laufflächen 18 und einer der unteren Laufflächen 19. Die unteren Laufflächen 19 sind in einer Laufkammer 25 in einem Endabschnitt 24 der zweiten Schiene 21 ausgebildet. Weiterhin ist erkennbar, dass sowohl die oberen Laufflächen 17 horizontal und vertikal ausgerichtete Laufflächen, d. h. Laufflächen, die in der vertikalen Ebene verlaufen und Laufflächen, die in der horizontalen Ebene verlaufen, als auch die seitlichen Laufflächen 18 horizontal und vertikal ausgerichtete Laufflächen aufweisen. Insbesondere weist hier die zweite Schiene 21 mit den seitlichen Laufflächen 18 eine erste Lauffläche 39 auf, auf welcher die Laufrollen 36 von Seitenrollenwagen 35 laufen (siehe Figur 3), und eine zweite Lauffläche 30 auf, auf welcher Führungsrollen 37 der Seitenrollenwagen 35 (siehe Figur 3) laufen. Wie hier erkennbar ist, sind die erste Lauffläche 28 und die zweite Lauffläche 30 senkrecht zueinander angeordnet und die zweite Lauffläche 30 ist weiter zum inneren Profilrand 29, welcher zur Fahrzeuginnenseite orientiert ist, angeordnet. Parallel zu der zweiten Lauffläche 30 ist eine Anschlagfläche 14 in fahrzeugaußenseitiger Richtung für die Führungsrolle 37 ausgebildet.

Weiterhin sind zwei vertikal gegenüberliegende obere Laufflächen 17 in einem Verbindungseckbereich 22 der ersten Schiene 20 und der zweiten Schiene 21 angeordnet, um als obere und untere Lauffläche für die Rollen der Rollenwagen zum Bewegen der Dachstruktur zu dienen. Der Verbindungseckbereich 22 bildet somit eine im Wesentlichen U-förmige Laufkammer 23. Weiterhin weist die erste Schiene 20 eine im Wesentlichen horizontal ausgerichtete Anschlagfläche 26 auf, welche als Eingriffsfläche für einen mit einer entsprechenden Gegenfläche ausgebildeten Rollenwagen von der Vielzahl von Rollenwagen zum Bewegen der oberen Dachstruktur dient. Sowohl die erste Schiene 20 des Profilkörpers 16 als auch die zweite Schiene 21 weisen Versteifungstunnel 27 auf. In der hier dargestellten Ausführungsform weist die erste Schiene 20 einen Versteifungstunnel 27 und die zweite Schiene 21 drei Versteifungstunnel 27 auf. Der hier dargestellte Führungsgurt 3 ist aus Aluminium hergestellt.

Figur 3 zeigt eine Schnittansicht des Führungsgurts 3, an welchem hier nur ein Seitenrollenwagen bzw. Rollenwagen zum Bewegen der seitlichen Wandstruktur 35 angeordnet ist, welcher mit Laufrollen 36 mit zweiter Drehachse 44 versehen ist, welche an der horizontal ausgerichteten ersten Lauffläche 28 laufen, und mit einer Führungsrolle 37 mit erster Drehachse 43, welche an der vertikal ausgerichteten zweiten Lauffläche 30 läuft. Weil die Führungsrolle 37 unterhalb der Laufrollen 36 angeordnet ist, das heißt in Richtung der Kraft F, die durch das Gewicht der durch den Seitenrollenwagen 35 gehaltenen Plane auf den Seitenrollenwagen 35 ausgeübt wird, ergibt sich der Vorteil, dass der Höhenunterschied h des Punktes A, an welchem die Laufrolle 36 auf einer zugeordneten ersten Lauffläche 28 der zweiten Schiene 21 aufliegt, und des Punktes B, an welchem die Führungsrolle 37 an der Schiene 21 anliegt, sehr klein gehalten werden kann. Hierdurch ist die Hebelwirkung, die zu einer axialen Belastung der Laufrolle 36 an dem Punkt A führt, geringer als beim Stand der Technik. Der Höhenunterschied h wird hierbei so gering wie möglich gewählt, was dadurch erreicht werden kann, dass die Oberseite der Führungsrolle 37 in etwa mit dem unteren Auflagepunkt A der Laufrolle 36 auf einer Horizontalen liegt. Der minimale Höhenunterschied h ist hier durch die Dicke des horizontalen Stegs vorgegeben, welcher die Kammern der Laufflächen begrenzt.

Bei einer Bewegung der Plane zur Außenseite des Wagens schlägt die Führungsrolle 37 am äußeren Anschlag 14 der zweiten Schiene 21 an, noch bevor die Laufrollen 36 eine Seitenwand berühren und beschädigt werden könnten. Der Seitenrollenwagen 35 wird also durch die Führungsrolle 37 vor zu großen Bewegungen gegen die Wageninnenseite und gegen die Wagenaußenseite geschützt.

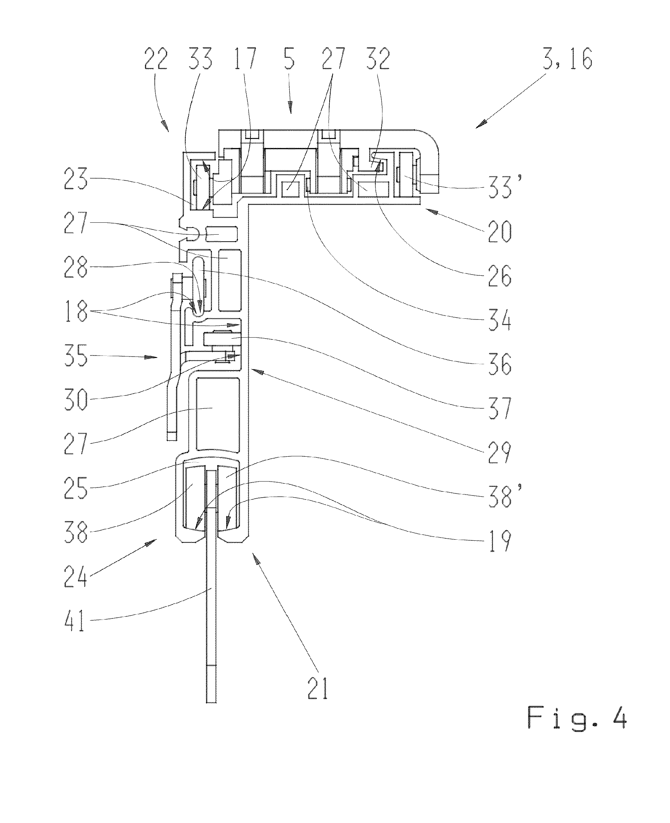

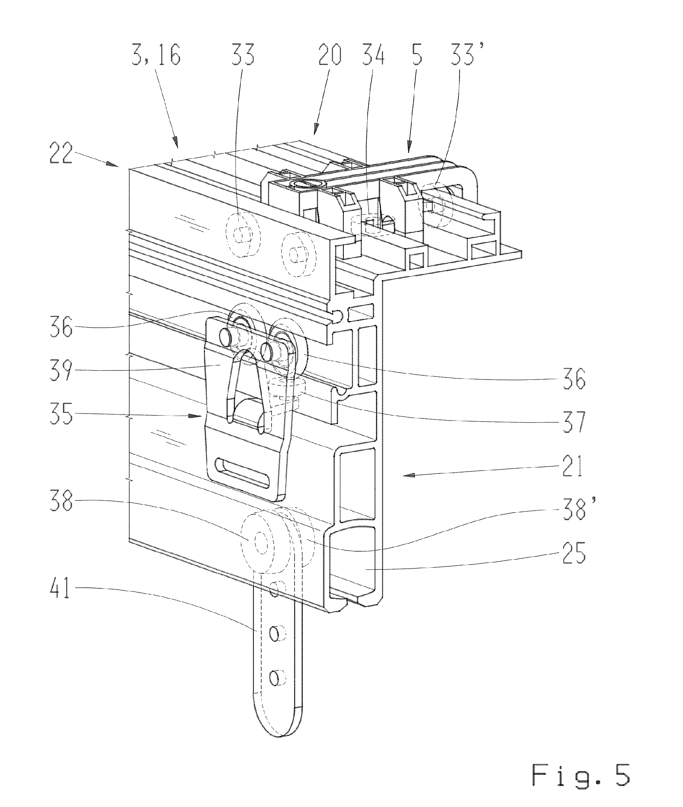

Des Weiteren ist unterhalb der ersten und der zweiten Laufflächen 28, 30 ein Laufbereich mit unteren Laufflächen 19 für Laufrollen 38, 38' von Rungenwagen 41 (siehe Figur 4 und Figur 5) ausgebildet. Dieser Laufbereich ist hier in einer im Wesentlichen senkrecht durch die erste Lauffläche 28 verlaufenden Ebene angeordnet. Damit kann der Hebel, der durch einen horizontalen Versatz zwischen Rungenwagen 41 und Laufrolle 38, 38' gebildet wird, minimiert werden. Mit diesem Hebel wirkt die Gewichtskraft des Rungenwagens 41 auf die Laufrolle 38, 38', was zu einer zusätzlichen unerwünschten axialen Belastung der Laufrolle 38, 38' führen kann.

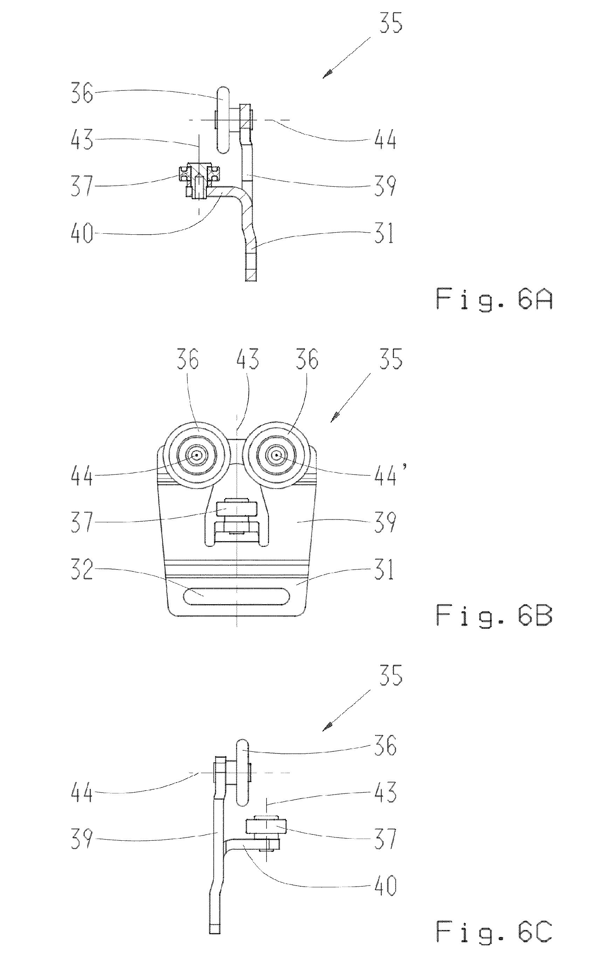

Figur 4 zeigt eine Schnittansicht des in Figur 2 dargestellten Führungsgurts 3 mit allen Rollenwagen. Der Standard-Rollenwagen 5 weist zwei äußere linke Rollen 33 auf, von denen hier nur eine sichtbar ist, und eine äußere rechte Rolle 33'. Darüber hinaus ist in der Mitte die radiale Führungsrolle 34 vorgesehen. Der Standard-Rollenwagen 5 ist auf der ersten Schiene 20 des Profilkörpers 16 hin und her bewegbar. Weiterhin ist erkennbar, dass der Seitenrollenwagen 35 zwei Laufrollen 36 und eine Führungsrolle 37 aufweist. Außerdem ist der Seitenrollenwagen 35 mit einer Lasche 31 (siehe Figur 6B) ausgestattet, welche zum Befestigen der seitlichen Gurte der Seitenplane dient. An dem Endabschnitt 24 der zweiten Schiene 21 ist darüber hinaus die Laufkammer 25 vorgesehen, in welcher Laufrollen 38, 38' mit Kugellager für die hier nicht dargestellten vertikal verlaufenden Rungen angeordnet sind.

Figur 5 zeigt eine perspektivische Ansicht des in Figur 4 dargestellten Führungsgurts 3, bei welchem nochmals besonders gut die Anordnung der verschiedenen Rollenwagen, nämlich des Standard-Rollenwagens 5, des Seitenrollenwagens 35 und der Laufrollen 38, 38' an den ersten und zweiten Schienen 20, 21 des Profilkörpers 16 des Führungsgurts 3 erkennbar ist.

Figuren 6A bis 6F zeigen verschiedene Ansichten eines Seitenrollenwagens 35 gemäß einer Ausführungsform. Fig. 6A zeigt einen Schnitt durch die vertikale Symmetrieachse des Seitenrollenwagens 35. Fig. 6B zeigt den Seitenrollenwagen 35 von der zur Wageninnenseite orientierten Seite. Die Laufrollen 36 weisen parallele Drehachsen 44 und 44' auf. Die Drehachse 43 der Führungsrolle 37 steht senkrecht zu den beiden Drehachsen 44 und 44'. Wie in Fig. 6B weiterhin zu erkennen ist, umfasst der Seitenrollenwagen eine Lasche 31 mit einem Schlitz 32, an dem die seitliche Plane befestigt wird.

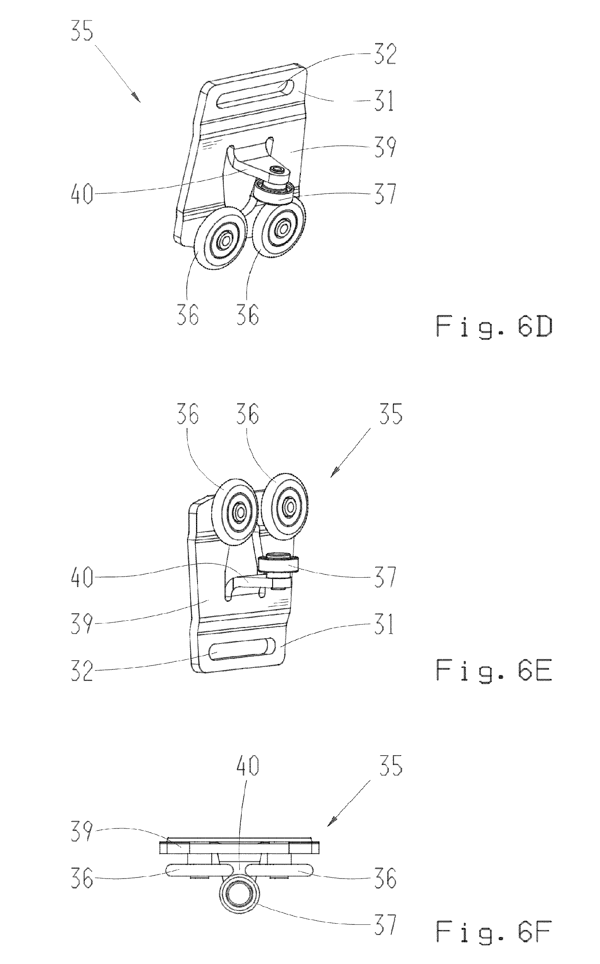

Fig. 6C zeigt den Seitenrollenwagen 35 von seiner Stirnseite, also von vorn oder von hinten. Fig. 6D zeigt den Seitenrollenwagen 35 in einer perspektivischen Ansicht auf den Kopf gestellt, Fig. 6E wiederum aufrecht von innen. Fig. 6F zeigt den Seitenrollenwagen 35 von oben. Der Seitenrollenwagen 35 wird gebildet durch eine Halteplatte 39, vorzugsweise aus Metall, an der zwei Laufrollen 36 und eine Führungsrolle 37 angeordnet sind. Die beiden Laufrollen 36 sind vertikal orientiert und entlang einer horizontalen Linie angeordnet, so dass sie in der ersten Lauffläche 28 der zweiten Schiene 21 (siehe Figur 4) also in einer gemeinsamen Spur laufen können. Sie drehen sich um eine horizontale Drehachse 44. Die Führungsrolle 37 ist an einem Schenkel 40 der Halteplatte 39 angeordnet, der aus der Halteplatte 39 herausgebogen ist und im Betriebszustand des Seitenrollenwagens 35 zur Fahrzeugmitte zeigt. Die Führungsrolle 37 ist horizontal angeordnet, dreht sich also um eine vertikale Drehachse 43. Die Drehachsen 44 der Laufrollen 36 stehen demnach senkrecht zur Drehachse 43 der Führungsrolle 37. Wie in Figur 6B und Figur 6F zu sehen ist, ist die Führungsrolle 37 symmetrisch zu den beiden Laufrollen 36 angeordnet, d.h. dass ein erster Abstand von der Führungsrolle 37 zu einer der zumindest zwei Laufrollen 36 gleich einem zweiten Abstand von der Führungsrolle 37 zu der anderen der zumindest zwei Laufrollen 36 ist. Die beiden Laufrollen 36 und die Führungsrolle 37 bilden somit ein gleichschenkliges Dreieck mit der Führungsrolle 37 im Scheitelpunkt der Schenkel. Hierdurch wird ein Verkanten des Seitenrollenwagens 35 beim Bewegen vermieden.

### Bezugszeichen

- 1: Schiebeverdeckstruktur
- 2: Spriegel
- 3, 3': Führungsgurte
- 4: Rollenwagen mit Seilanbindung
- 5: Standard-Rollenwagen
- 6: Endrollenwagen
- 7: erstes Ende
- 8: Portalbalken
- 9: Faltplatten
- 10: Spriegelanbindung
- 11: Rollen
- 12: zweites Ende
- 13: Verriegelungsmechanismus
- 14: Anschlagfläche
- 15: Schlaufe
- 16: Profilkörper
- 17: obere Laufflächen
- 18: seitliche Laufflächen
- 19: untere Laufflächen
- 20: erste Schiene
- 21: zweite Schiene
- 22: Verbindungseckbereich
- 23: U-förmige Laufkammer
- 24: Endabschnitt
- 25: Laufkammer am Endabschnitt
- 26: Anschlagfläche
- 27: Versteifungskammer
- 28: erste Lauffläche
- 29: innerer Profilrand

- 30: zweite Lauffläche
- 31: Lasche
- 32: Schlitz
- 33, 33': Rollen des Standard-Rollenwagens
- 34: radiale Führungsrolle
- 35: Seitenrollenwagen
- 36: Laufrollen des Seitenrollenwagens
- 37: Führungsrolle
- 38, 38': Laufrollen
- 39: Halteplatte
- 40: Schenkel
- 41: Rungenwagen
- 42, 42': Kammern
- 43: erste Drehachse
- 44, 44': zweite Drehachse

- A: Auflagepunkt der Laufrolle auf erster Lauffläche
- B: Anlagepunkt der Führungsrolle an zweiter Lauffläche
- F: Gewichtskraft der Plane
- h: Höhenunterschied zwischen Punkt A und Punkt B

## Patentansprüche

1. Seitenrollenwagen (35) zum Halten einer Plane einer Schiebeverdeckstruktur (1) eines Fahrzeugaufbaus oder eines Containers, wobei der Seitenrollenwagen (35) zumindest zwei Laufrollen (36) aufweist, die ausgestaltet sind zum Laufen auf einer ersten Lauffläche (28) einer Schiene (21), **dadurch gekennzeichnet, dass** zumindest eine Führungsrolle (37) vorgesehen ist, welche unterhalb der zumindest zwei Laufrollen (36) angeordnet ist und zum Laufen auf einer zweiten Lauffläche (30) der Schiene ausgestaltet ist, wobei die zumindest eine Führungsrolle (37) derart angeordnet ist, dass eine erste Drehachse (43) der Führungsrolle nicht parallel zu einer zweiten Drehachse (44) einer der zumindest zwei Laufrollen ist.

2. Seitenrollenwagen (35) gemäß Anspruch 1, **dadurch gekennzeichnet, dass** die zumindest zwei Laufrollen (36) parallele Drehachsen (44, 44') aufweisen.

3. Seitenrollenwagen (35) gemäß einem der vorherigen Ansprüche, **dadurch gekennzeichnet, dass** die erste Drehachse (43) der Führungsrolle und die zweite Drehachse (44) einer der zumindest zwei Laufrollen einen Winkel im Bereich zwischen 5° bis 175°, vorzugsweise im Bereich zwischen 45° bis 135°, besonders bevorzugt im Bereich zwischen 80° bis 100°, insbesondere einen Winkel von im Wesentlichen 90°einschließen.

4. Seitenrollenwagen (35) gemäß einem der vorherigen Ansprüche, **dadurch gekennzeichnet, dass** die zumindest eine Führungsrolle (37) im Betriebszustand des Rollenwagens (35) zur Fahrzeuginnenseite oder Containerinnenseite orientiert ist.

5. Seitenrollenwagen (35) gemäß einem der vorherigen Ansprüche, **dadurch gekennzeichnet, dass** der Seitenrollenwagen (35) eine Halteplatte (39) umfasst, an welcher zumindest ein Schenkel (40) angeordnet ist, an dem die zumindest eine Führungsrolle (37) angeordnet ist, wobei der Schenkel (40) aus der Halteplatte (39) herausgeformt ist.

6. Seitenrollenwagen (35) gemäß einem der vorherigen Ansprüche, **dadurch gekennzeichnet, dass** die zumindest eine Führungsrolle (37) aus Kunststoff gefertigt ist.

7. Seitenrollenwagen (35) gemäß einem der vorherigen Ansprüche, **dadurch gekennzeichnet, dass** die zumindest eine Führungsrolle (37) derart angeordnet ist, dass ein erster Abstand von der Führungsrolle (37) zu einer der zumindest zwei Laufrollen (36) gleich einem zweiten Abstand von der Führungsrolle (37) zu der anderen der zumindest zwei Laufrollen (36) ist.

8. Führungsgurt (3, 3') mit zumindest einer Schiene (21) für Seitenrollenwagen (35), insbesondere gemäß einem der vorherigen Ansprüche, wobei die Schiene (21) eine erste Lauffläche (28) aufweist, auf welcher Laufrollen (36) der Seitenrollenwagen (35) laufen können, **dadurch gekennzeichnet, dass** die Schiene (21) eine zweite Lauffläche (30) aufweist, auf welcher Führungsrollen (37) der Seitenrollenwagen (35) laufen können, wobei die erste Lauffläche (28) nicht parallel zu der zweiten Lauffläche (30) angeordnet ist.

9. Führungsgurt (3, 3') gemäß Anspruch 8, **dadurch gekennzeichnet, dass** die zweite Lauffläche (30) im Betriebszustand der Schiene (21) weiter zur Fahrzeuginnenseite oder Containerinnenseite angeordnet ist als die erste Lauffläche (28).

10. Führungsgurt (3, 3') gemäß Anspruch 8 oder 9, **dadurch gekennzeichnet, dass** an der Schiene (21) parallel zu der zweiten Lauffläche (30) an der der zweiten Lauffläche (30) abgewandten Seite der Führungsrolle (37) eine Anschlagfläche (14) für die zumindest eine Führungsrolle (37) ausgebildet ist.

11. Führungsgurt (3, 3') gemäß einem der Ansprüche 8 bis 10, **dadurch gekennzeichnet, dass** unterhalb der ersten und der zweiten Laufflächen (28, 30) ein Laufbereich mit unteren Laufflächen (19) für Rungenwagen (41) ausgebildet ist, wobei der Laufbereich für Rungenwagen in einer Ebene angeordnet ist, welche im Wesentlichen lotrecht unter der ersten Lauffläche verläuft.

12. Führungsgurt (3, 3') gemäß einem der Ansprüche 8 bis 11, **dadurch gekennzeichnet, dass** die Schiene (21) eine Profilschiene ist und die erste Lauffläche (28) und die zweite Lauffläche (30) in teilweise offenen Kammern (42, 42') angeordnet sind.
